# FASCICULE DE BREVET EUROPEEN

(11) **EP 0 464 889 B1**
(45) Date de publication et mention de la délivrance du brevet: **22.09.1993**
(21) Numéro de dépôt: 91201518.7
(22) Date de dépôt: 18.06.1991
(51) Int. Cl.: F16L 25/00

(54) **Raccord pour la fixation d'un tuyau à paroi ondulée**
Kupplung zur Verbindung eines Wellrohres
Coupling for the connection of a corrugated pipe

(30) Priorité: 27.06.1990 BE 9000657
(43) Date de publication de la demande: 08.01.1992
(73) Titulaire: DRAKA POLVA B.V., NL-1062 HM Amsterdam (NL)
(72) Inventeur: Paauwe, Arie M., NL-2678 SV De Lier (ZH) (NL)
(74) Mandataire: Bouchoms, Maurice

(56) Documents cités:
- FR-A- 2 641 842
- GB-A- 2 197 409

## Description

La présente invention concerne un raccord qui convient particulièrement pour la fixation d'un tuyau à paroi ondulée.

Les tuyaux à paroi ondulées réalisés en métal ou en matières plastiques sont d'utilisation courante de longue date notamment dans le domaine de la construction civile.

Ainsi, par exemple, de tels tuyaux sont souvent utilisées pour évacuer les fumées générées par des appareillages de chauffage.

Dans le brevet français 2 641 842, on a déjà proposé un raccord qui convient particulièrement pour fixer de tels tuyaux de façon sûre. Un tel raccord comprend un embout équipé d'un filetage externe et d'un épaulement interne, un écrou de serrage comportant un filetage interne pouvant coopérer avec le filetage externe de l'embout, une bague fendue élastique annelée intérieurement suivant le même profil que celui du tube annulé à raccorder et un joint d'étanchéité disposé autour du tube annelé et en retrait de son extrémité de façon telle que, lors du montage du raccord, par engagement du filetage interne de l'écrou de serrage sur le filetage externe de l'embout, ce joint soit pressé entre la bague fendue élastique et l'épaulement interne de l'embout fileté et comprimé contre le tube annulé.

Lors du montage d'un tel raccord, on enfile d'abord l'écrou de serrage sur le tuyau à raccorder, puis on place la bague fendue élastique en position adéquate sur le tuyau et ensuite l'anneau d'étanchéité, ce dernier étant amené contre la barye filetée et enfin, après avoir inséré le tuyau dans l'embout jusqu'à butée, on serre l'écrou de serrage sur le filetage extérieur de l'embout.

Il apparaît donc qu'un tel raccord doit être monté sur chantier et ce avec un grand soin. Il importe, par exemple, que la barye fendue soit placée en position correcte sur le tuyau à raccorder pour pouvoir garantir une bonne étanchéité.

La demanderesse a maintenant mis au point un nouveau raccord qui peut être prémonté en atelier et qui, par sa simplicité, n'exige pas, sur chantier, le recours à un opérateur particulièrement expérimenté et consciencieux. En outre, la mise en place sur chantier n'exige qu'un minimum d'opérations.

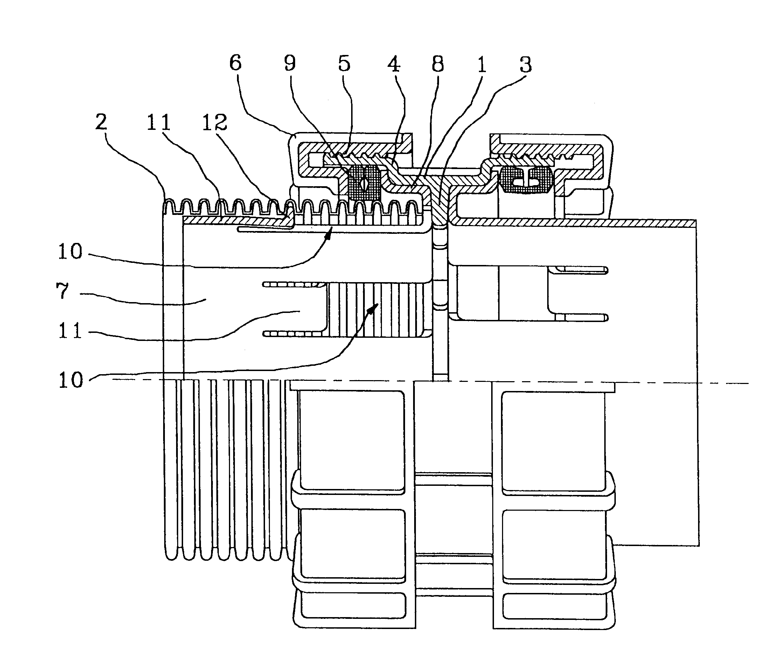

Le raccord conforme à la présente invention est, par ailleurs, illustré plus en détail dans la figure du dessin annexé qui donne une vue, en coupe partielle, d'une variante de réalisation d'un tel raccord.

Le raccord conforme à l'invention comprend :
a) un corps cylindrique annulaire (1) pouvant recevoir l'extrémité du tuyau à paroi ondulée (2) à fixer, ledit corps cylindrique (1) étant équipé d'une butée annulaire interne (3), présentant un ressaut (4) étagé vers l'extérieur et étant équipé d'un émérillon (6) vissé sur un filetage (5) prévu sur sa paroi externe
b) un élément cylindrique tubulaire présentant une partie tubulaire (7) de diamètre externe sensiblement égal au diamètre interne du tuyau à paroi ondulée (2) et une extrémité conformée (8) s'appuyant contre la butée interne (3) et épousant le ressaut (4)
c) un joint d'étanchéité annulaire (9) emprisonné entre l'extrémité conformée (8) et l'émérillon (6),

dans lequel la paroi de la partie tubulaire (7) de l'élément cylindrique tubulaire est pouvue de découpes longitudinales (10) définissant des languettes flexibles (11) dirigées vers l'extrémité conformée (8), les extrémités (12) des languettes flexibles (11), espacées de cette extrémité conformée (8), étant redressées vers l'extérieur de l'élément cylindrique tubulaire (7).

Selon un mode de réalisation qui est préféré, les extrémités (12) redressées des languettes flexibles (11) ont une hauteur sensiblement égale à la profondeur d'ondulation du tuyau à raccorder et une épaisseur sensiblement égale au pas d'ondulation de ce tuyau.

Selon une première variante de réalisation, les languettes flexibles (11) peuvent avoir une longueur identique et dans ce cas, l'espace entre les extrémités (12) des languettes flexibles (11) et l'extrémité conformée (8) est sensiblement égal au double de la distance entre le joint d'étanchéité annulaire (9) et la butée annulaire (3).

Selon une autre variante de réalisation, les languettes flexibles (11) peuvent avoir des longueurs différentes ainsi qu'il est d'ailleurs représenté sur la figure du dessin annexé.

Le raccord selon l'invention peut être symétrique par rapport à la butée annulaire (3), dans le cas notamment où il est destiné à raccorder entre eux deux tuyaux à paroi ondulée identiques. Il est toutefois bien évident que le raccord peut être réalisé de façon conforme à l'invention d'un côté de la butée (3), l'autre côté étant quelconque.

Le raccord conforme à l'invention peut être réalisé en tout matériau traditionnel et notamment en métal ou en matières plastiques et il peut être utilisé indifféremment pour fixer des tuyaux ondulés en métal ou en matières plastiques.

Lors de la réalisation, en atelier, du raccord conforme à l'invention, l'extrémité conformée (8) de l'élément cylindrique tubulaire (7) est insérée en place dans le corps annulaire cylindrique (1), le joint d'étanchéité annulaire est mis en place et l'émérillon (6) est engagé dans le filetage (5) de façon à emprisonner le joint d'étanchéité (9).

Pour raccorder sur chantier un tuyau à paroi ondulée (2) à l'aide du raccord ainsi constitué, il suffit à l'utilisateur d'enfiler ledit tuyau sur la partie tubulaire (7) de l'élément cylindrique tubulaire de façon telle que son extrémité contacte le fond de la partie conformée (8) de cet élément puis de visser en place l'émérillon (6).

Lors de l'enfilage du tuyau à paroi ondulée, les extrémités (12) des languettes flexibles sont repoussées dans l'élément tubulaire du fait de l'élasticité de ces languettes et, dès lors ces extrémités n'empêchent pas la mise en place du tuyau. Par contre, dès que le tuyau à paroi ondulée est en place, les extrémités redressées (12) des languettes flexibles 11 s'engagent dans une ondulation interne du tuyau et entravent l'extraction de celui-ci de l'élément tubulaire. En outre, lors du vissage de l'émérillon (6), le joint d'étanchéité (9) est comprimé radialement contre les ondulations externes du tuyau, qui est soutenu intérieurement par l'élément cylindrique tubulaire (7), et assure de ce fait une parfaite étanchéité.

Il apparaît donc que le raccord conforme à l'invention assure une bonne résistance en traction grâce aux extrémités redressées (12) des languettes flexibles (11) et au serrage engendré par le joint d'étanchéité (9) ainsi qu'une bonne étanchéité par le serrage du joint d'étanchéité.

En outre, un démontage du raccord, par exemple en vue d'une visite d'inspection, est rendu très aisé avec le raccord conforme à l'invention. Il suffit simplement, en effet, de dévisser l'émérillon (6) et de retirer du corps cylindrique (1) l'ensemble constitué par le tuyau à paroi ondulée (2), l'émérillon (6), le joint d'étanchéité (9) et l'élément cylindrique tubulaire (7, 8) ce dernier restant engagé dans le tuyau. Après inspection, le raccord est très facilement reconstitué en insérant l'élément cylindrique tubulaire (7, 8) dans le corps cylindrique (1) puis en vissant l'émérillon (6) sur celui-ci.

Enfin, en cours d'utilisation tout condensat aqueux s'écoulant dans le tuyau à paroi ondulée ne peut stagner entre la paroi interne du tuyau et l'élément tubulaire cylindrique (7) du fait de la présence des découpes (10) qui permettent l'évacuation de ce condensat.

Le raccord conforme à l'invention est spécialement conçu pour le raccordement de tuyaux à paroi ondulée, mais il est bien évident que son exploitation est également possible pour raccorder des tuyaux à paroi lisse. Dans ce dernier cas toutefois, les extrémités redressées (11) des languettes flexibles (11) ne peuvent assurer une résistance en traction similaire à celle obtenues avec des tuyaux à paroi ondulée.

## Revendications

1. Raccord pour la fixation d'un tuyau à paroi ondulée comprenant :
a) un corps cylindrique annulaire (1) pouvant recevoir l'extrémité du tuyau à paroi ondulée (2) à fixer, ledit corps cylindrique (1) étant équipé d'une butée annulaire interne 3 , présentant un ressaut (4) étagé vers l'extérieur et étant équipé d'un émérillon (6) vissé sur un filetage (5) prévu sur sa paroi externe
b) un élément cylindrique tubulaire présentant une partie tubulaire (7) de diamètre externe sensiblement égal au diamètre interne du tuyau à paroi ondulée (2) et une extrémité conformée (8) s'appuyant contre la butée interne (3) et épousant le ressaut (4)
c) un joint d'étanchéité annulaire (9) emprisonné entre l'extrémité conformée (8) et l'émérillon (6),
dans lequel la paroi de la partie tubulaire (7) de l'élément cylindrique tubulaire est pouvue de découpes longitudinales (10) définissant des languettes flexibles (11) dirigées vers l'extrémité conformée (8), les extrémités (12) des languettes flexibles (11), espacées de cette extrémité conformée (8), étant redressées vers l'extérieur de l'élément cylindrique tubulaire (7).

2. Raccord selon la revendication 1 caractérisé en ce que les extrémités (12) redressées des languettes flexibles (11) ont une hauteur sensiblement égale à la profondeur d'ondulation du tuyau à raccorder et une épaisseur sensiblement égale au pas d'ondulation de ce tuyau.

3. Raccord selon la revendication 1 caractérisé en ce que les languettes flexibles (11) sont de longueurs égales, l'espace entre les extrémités (12) des languettes flexibles (11) et l'extrémité conformée (8) étant sensiblement égal au double de la distance entre le joint d'étanchéité annulaire (9) et la butée annulaire (3).

4. Raccord selon la revendication 1 caractérisé en ce que les languettes flexibles (11) sont de longueurs différentes.

5. Raccord selon la revendication 1 caractérisé en ce qu'il est symétrique par rapport à la butée annulaire (3).

## Patentansprüche

1. Verbinder zur Befestigung eines Rohrs mit gewellter Wand, umfassend:
a) einen zylindrischen ringförmigen Körper (1), der das Ende des zu befestigenden Rohrs mit gewellter Wand (2) aufnehmen kann, wobei der besagte zylindrische Körper (1) mit einem ringförmigen inneren Anschlag (3) versehen ist, einen nach außen hin abgestuften Vorsprung (4) aufweist und mit einem Drehring (6) versehen ist, der auf ein auf seiner Außenwand vorgesehenes Gewinde (5) geschraubt ist
b) ein zylindrisches rohrförmiges Element, aufweisend einen rohrförmigen Teil (7) mit einem Außendurchmesser, der im wesentlichen gleich dem Innendurchmesser des Rohrs mit gewellter Wand (2) ist, sowie ein angepaßtes Ende (8), das sich gegen den inneren Anschlag (3) abstützt und sich an den Vorsprung (4) anschmiegt
c) einen zwischen dem angepaßten Ende (8) und dem Drehring (6) eingeschlossenen Dichtring (9),
wobei die Wand des rohrförmigen Teils (7) des zylindrischen rohrförmigen Elements mit Längsschlitzen (10) versehen ist, die auf das angepaßte Ende (8) zu gerichtete elastische Zungen (11) begrenzen, wobei die im Abstand von diesem angepaßten Ende (8) angeordneten Enden (12) der elastischen Zungen (11) in Richtung der Außenseite des zylindrischen rohrförmigen Elements (7) hin ausgerichtet sind.

2. Verbinder nach Anspruch 1, dadurch gekennzeichnet, daß die ausgerichteten Enden (12) der elastischen Zungen (11) eine Höhe aufweisen, die im wesentlichen gleich der Tiefe der Wellen des zu verbindenden Rohrs ist, und eine Stärke, die im wesentlichen gleich der Ganghöhe der Wellen ist.

3. Verbinder nach Anspruch 1, dadurch gekennzeichnet, daß die elastischen Zungen (11) von gleicher Länge sind, wobei der Zwischenraum zwischen den Enden (12) der elastischen Zungen (11) und dem angepaßten Ende (8) im wesentlichen gleich dem Doppelten des Abstands zwischen dem Dichtring (9) und dem ringförmigen Anschlag (3) ist.

4. Verbinder nach Anspruch 1, dadurch gekennzeichnet, daß die elastischen Zungen (11) von unterschiedlicher Länge sind.

5. Verbinder nach Anspruch 1, dadurch gekennzeichnet, daß er bezüglich des ringförmigen Anschlags (3) symmetrisch ist.

## Claims

1. Coupling for fixing a corrugated-walled pipe, comprising:
a) an annular cylindrical body (1) which can receive the end of the corrugated-walled pipe (2) to be fixed, the said cylindrical body (1) being equipped with an internal annular stop 3, exhibiting an externally stepped projection (4) and being equipped with a swivel nut (6) screwed onto a thread (5) provided on its external wall
b) a tubular cylindrical element exhibiting a tubular part (7) of external diameter substantially equal to the internal diameter of the corrugated-walled pipe (2) and a shaped end (8) bearing against the internal stop (3) and shaped to fit round the projection (4)
c) an annular seal (9) trapped between the shaped end (8) and the swivel nut (6),
in which the wall of the tubular part (7) of the tubular cylindrical element is provided with longitudinal cut-outs (10) defining flexible tabs (11) directed towards the shaped end (8), the ends (12) of the flexible tabs (11), which are spaced away from this shaped end (8), standing up towards the outside of the tubular cylindrical element (7).

2. Coupling according to Claim 1, characterised in that the standing-up ends (12) of the flexible tabs (11) have a height substantially equal to the corrugation depth of the pipe to be coupled and a thickness substantially equal to the corrugation pitch of this pipe.

3. Coupling according to Claim 1, characterised in that the flexible tabs (11) are of the same length, the space between the ends (12) of the flexible tabs (11) and the shaped end (8) being substantially equal to twice the distance between the annular seal (9) and the annular stop (3).

4. Coupling according to Claim 1, characterised in that the flexible tabs (11) are of differing lengths.

5. Coupling according to Claim 1, characterised in that it is symmetrical in relation to the annular stop (3).
